# EUROPEAN PATENT SPECIFICATION

(11) **EP 0 854 276 B1**
(45) Date of publication and mention of the grant of the patent: **02.08.2000**
(21) Application number: 97830690.0
(22) Date of filing: 22.12.1997
(51) Int. Cl.: F02B 43/00

(54) **Long fuel distance internal combustion engine, having a methane feeding system**
Brennkraftmaschine mit Methanzuführungssysem zum Durchfahren grosser Abstände
Moteur à combustion interne avec système d'alimentation en méthane pour parcourir une longue distance

(30) Priority: 17.01.1997 IT TO970030
(43) Date of publication of application: 22.07.1998
(73) Proprietor: C.R.F. Societa' Consortile per Azioni, 10043 Orbassano (Torino) (IT)
(72) Inventor: Ferrera, Massimo, 10043 Orbassano (Torino) (IT); Gozzelino, Riccardo, 10043 Orbassano (Torino) (IT); Barbiero, Roberto, 10043 Orbassano (Torino) (IT)
(74) Representative: Notaro, Giancarlo

(56) References cited:
- EP-A- 0 293 832
- EP-A- 0 685 639
- US-A- 5 067 467
- US-A- 5 329 908

## Description

The present invention relates to the field of internal combustion engines having a methane feeding system, of the type comprising:
- a plurality of methane injector devices, respectively associated with the cylinders of the engine,
- a methane feeding manifold for feeding methane to the injectors,
- a high pressure methane reservoir connected to said manifold,
- a methane pressure regulator device, interposed in the connection between the reservoir and the manifold, to decrease the pressure of methane from the value at which it is accumulated in the reservoir down to a value adapted for the proper operation of the injector devices,
and an electronic control unit for controlling the injector devices, adapted to control the injector devices as a function of a number of engine operating parameters.

An engine of the above indicated type is disclosed for example in European Patent Application EP-A-0 801 223, which has been published after the priority date of the present application.

A drawback which is encountered sometimes by users of motor-vehicles provided with methane operated engines lies in that, for instance in Italy, the service stations where it is possible to fill up with methane are not yet distributed extensively on the whole territory. Therefore, it would be desirable to have engines capable of having a long fuel distance.

The object of the present invention is therefore that of providing an engine having a methane feeding system which, for a given volume of the reservoir, is able to have a greater fuel distance.

In view of achieving this object, the invention provides an engine of the type indicated at the beginning, characterized in that said engine comprises a compressor interposed in the connection between the reservoir and the pressure regulator device, sensor means for sensing the pressure of the methane in the reservoir and in that said electronic control unit attends to activating said compressor when the pressure of the methane within the reservoir decreases below a first predetermined threshold value and as long as this pressure does not decrease further until it becomes lower than a second predetermined threshold value, lower than said first threshold value.

Due to these features, the engine according to the invention is able of having a longer fuel distance with respect to an engine according to the prior art provided with a reservoir having identical volume. In the engines of the above indicated type, the pressure at which the methane is accumulated within the reservoir typically is relatively high, in the order of 200 bars. The pressure at which the injector devices operate is instead in the order of 7 bars. The pressure regulator device interposed between the reservoir and the methane feeding manifold or rail is used just for decreasing the pressure of the gas from the high value at which it is accumulated within the reservoir down to the value at which the injector devices are able to operate properly.

Therefore, in conventional engines, when the pressure within the reservoir decreases below a value in the order of 15 bars, the methane left within the reservoir cannot be used in practice, since it is not able to reach the injectors at a pressure sufficient for the proper operation thereof.

In the engine according to the invention, when the pressure within the methane reservoir decreases below the above mentioned threshold value, such as approximately 15 bars, the electronic control unit attends to activating a compressor which is arranged in the connection between the reservoir and the pressure regulator. This compressor brings the gas pressure again to a sufficiently high value, such as approximately 20 bars to enable the engine to keep on operating properly, until the pressure within the reservoir decreases below a minimum value, such as approximately 9 bars, which is admissible for the proper operation of the engine.

The engine according to the invention is provided therefore with a kind of fuel reserve which is exploited by activating the above mentioned compressor when the methane pressure within the reservoir decreases below the above mentioned threshold value in the order of 15 bars.

The invention will be now described in detail with reference to the annexed drawing, given purely by way of non limiting example, which shows a diagram of an engine according to the invention.

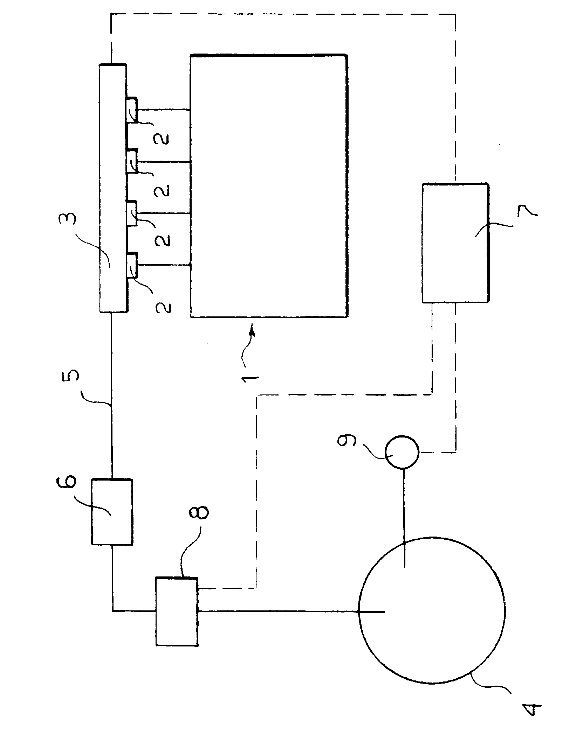

With reference to the drawing, numeral 1 generally designates a motor-vehicle internal combustion engine provided with a methane feeding system. According to a conventional art, the methane feeding system is provided in addition to a conventional gasoline feeding system with which the engine is also provided. The drawing only shows the details of the methane feeding system, the gasoline feeding system being absolutely conventional. Reference numeral 2 generally designates four injector devices, for injecting methane into respective cylinders of engine 1. Injectors 2 receive methane from a feeding manifold or rail 3, whose inlet is connected to a reservoir 4 in which the methane is accumulated at high pressure, such as in the order of 200 bars. Reservoir 4 is connected to manifold 3 through a line 5 in which there is interposed a pressure regulator device 6, which can be made in any known way, but preferably being of the type disclosed in European Patent application EP-A-0 685 639 of the same applicant.

Yet according the prior art, the injector devices 2 are controlled by an electronic control unit 7 which receives a number of signals indicative of various engine operating parameters. The sensor means provided for feeding these signals to the control unit and the associated connections are not described herein, since they can be made in any known way and do not fall within the scope of the present invention.

According to the invention, in the connection between the reservoir 4 and the pressure regulator device 6 there is interposed a compressor 8 of any known type which is activated by the electronic control unit 7 when a pressure sensor 9 associated with reservoir 4 indicates a decrease of the pressure within reservoir 4 below a predetermined threshold value, such as in the order of 15 bars and as long as this pressure does not decrease further until it becomes lower than a minimum value which is admissible for the proper operation of the engine, such as in the order of 9 bars.

As already indicated above, due to the above described features, the engine according to the invention, contrary to the engines according to the prior art, is able of keeping on operating even when the pressure within reservoir 4 decreases below the above mentioned first threshold value of the order of 15 bars. In this condition, indeed, compressor 8 attends to increase the methane pressure up to a value sufficient for enabling the engine to operate properly, such as in the order of 20 bars. The engine according to the invention is therefore able to exploit a fuel reserve as long as the pressure within the reservoir does not decrease below the above mentioned second minimum threshold value, in the order of 9 bars. For a given volume of the reservoir, the engine according to the invention is therefore able to have a longer fuel distance.

Naturally, while the principle of the invention remains the same, the details of construction and the embodiments may widely vary with respect to what has been described and illustrated purely by way of example, without departing from the scope of the present invention.

## Claims

1. Internal combustion engine having a methane feeding system, comprising:
- a plurality of methane injector devices (2), respectively associated with the cylinders of the engine,
- a methane feeding manifold (3) for feeding methane to the injectors (2),
- a high pressure methane reservoir (4) connected to said manifold (3),
- a methane pressure regulator device (6), interposed in the connection between the reservoir (4) and the manifold (3), for decreasing the methane pressure from the value at which it is accumulated within the reservoir (4) down to a value adapted for the proper operation of the injector devices (2), and
- an electronic control unit (7) for controlling the injector devices (2), which controls the injector devices (2) as a function of a number of engine operating parameters,
characterized in that said engine further comprises:
- a compressor (8) interposed in the connection between the reservoir (4) and the pressure regulator device (6),
- sensor means for sensing the pressure of methane within the reservoir (4);
- said electronic control unit (7) being adapted to activate said compressor (8) when the pressure of the methane within the reservoir (4) decreases below a first predetermined threshold value and as long as this pressure does not further decrease until it becomes lower than a second predetermined threshold value, lower than said first threshold value.

2. Engine according to claim 1, characterized in that said first threshold value is in the order of 15 bars.

3. Engine according to claim 1, characterized in that said second threshold value is in the order of 9 bars.

## Revendications

1. Moteur à combustion interne possédant un circuit d'alimentation en méthane, comprenant :
plusieurs dispositifs injecteurs (2) de méthane associés respectivement aux cylindres du moteur,
un collecteur (3) d'alimentation en méthane des injecteurs (2),
un réservoir (4) de méthane à haute pression, raccordé au collecteur (3),
un dispositif régulateur de pression (6) de méthane placé au raccord du réservoir (4) et du collecteur (3) et destiné à réduire la pression du méthane de la valeur à laquelle il est accumulé dans le réservoir (4) jusqu'à une valeur adaptée au fonctionnement convenable des dispositifs injecteurs (2) , et
une unité électronique (7) de commande des dispositifs injecteurs (2) qui commande les dispositifs injecteurs (2) en fonction d'un certain nombre de paramètres de fonctionnement du moteur,
caractérisé en ce que le moteur comporte en outre :
un compresseur (8) placé au raccord entre le réservoir (4) et le dispositif régulateur de pression (6), et
un dispositif capteur destiné à détecter la pression du méthane dans le réservoir (4),
l'unité électronique (7) de commande étant destinée à activer le compresseur (8) lorsque la pression du méthane dans le réservoir (4) diminue au-dessous d'une première valeur prédéterminée de seuil et tant que cette pression ne diminue pas jusqu'à une valeur inférieure à une seconde valeur prédéterminée de seuil qui est inférieure à la première valeur de seuil.

2. Moteur selon la revendication 1, caractérisé en ce que la première valeur de seuil est de l'ordre de 15 bar.

3. Moteur selon la revendication 1, caractérisé en ce que la seconde valeur de seuil est de l'ordre de 9 bar.

## Patentansprüche

1. Verbrennungsmotor mit einem Methan-Zuführsystem, bestehend aus:
- einer Mehrzahl von Methan-Düsenvorrichtungen (2), die jeweils den Zylindern des Motors zugeordnet sind,
- ein Methan-Zuführverteiler (3) zum Zuführen von Methan zu den Düsen (2),
- ein Hochdruck-Methanspeicher (4) der mit dem Verteiler (3) verbunden ist,
- eine Methan-Druckregulierungsvorrichtung (6), die in der Verbindung zwischen dem Speicher (4) und dem Verteiler (3) angeordnet ist, um den Druck des Methans von einem Wert, mit welchem es in dem Speicher (4) gespeichert ist, zu einem Wert zu verringern, der angepaßt ist für den geeigneten Betrieb der Düsenvorrichtungen (2), und
- eine elektronische Steuerungseinheit (7) zum Steuern der Düsenvorrichtungen (2), welche die Düsenvorrichtungen (2) als eine Funktion von einer Anzahl von Betriebsparametern des Motors steuert,
dadurch gekennzeichnet, daß der Motor weiterhin besteht aus:
- einen Kompressor (8), der in der Verbindung zwischen dem Speicher (4) und der Druckregulierungsvorrichtung (6) angeordnet ist,
- Sensormittel zum Messen des Drucks des Methans in dem Speicher (4);
- wobei die elektronische Steuerungseinheit (7) angepaßt ist, den Kompressor (8) zu aktivieren, wenn der Druck von dem Methan in dem Speicher (4) unter einen ersten vorbestimmten Schwellenwert sinkt und solange dieser Druck nicht weiter sinkt, als ein zweiter vorbestimmter Schwellendruck, der kleiner ist als der erste Schwellendruck.

2. Motor gemäß Anspruch 1, dadurch gekennzeichnet, daß der erste Schwellenwert in der Ordnung von 15 bar liegt.

3. Motor gemäß Anspruch 1, dadurch gekennzeichnet, daß der zweite Schwellenwert in der Ordnung von 9 bar liegt.
